(19) Europäisches Patentamt European Patent Office Office européen des brevets

(11) **EP 3 532 802 B1**

## (12) EUROPEAN PATENT SPECIFICATION

(45) Date of publication and mention of the grant of the patent:
**12.08.2020 Bulletin 2020/33**

(21) Application number: **17797078.7**

(22) Date of filing: **24.10.2017**

(51) Int Cl.:
*G01D 5/244* (2006.01)        *G01P 3/481* (2006.01)
*G01P 3/487* (2006.01)        *G01M 13/021* (2019.01)
*G01M 15/06* (2006.01)

(86) International application number:
**PCT/EP2017/077183**

(87) International publication number:
**WO 2018/077886 (03.05.2018 Gazette 2018/18)**

(54) **METHOD TO DETERMINE ANGULAR PITCH OF A TOOTHED CRANK WHEEL OR GEAR**

VERFAHREN ZUR ERMITTLUNG DER WINKELTEILUNG EINES KURBELWELLE- ODER GEBER-ZAHNRADS

PROCÉDÉ POUR DÉTERMINER LE PAS ANGULAIRE D'UNE ROUE DENTÉE D'UN VILLEBREQUIN OU D'UN ROUE-ÉMETTEUR.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2016 GB 201618180**

(43) Date of publication of application:
**04.09.2019 Bulletin 2019/36**

(73) Proprietor: **Delphi Technologies IP Limited Saint Michael (BB)**

(72) Inventors:
• **EL HOR, Noureddine**
  **41350 Vineuil (FR)**
• **RIVA, Jérémy**
  **41120 Cormeray (FR)**

(74) Representative: **Delphi France SAS c/o Delphi Technologies Campus Saint Christophe Bâtiment Galilée 2 10, avenue de l'Entreprise 95863 Cergy Pontoise Cedex (FR)**

(56) References cited:
**DE-A1- 19 540 674     DE-A1-102014 213 547 US-B2- 7 607 415**

**Description**

TECHNICAL FIELD

The invention relates to methods of determining the angular pitch (angular interval between successive teeth) of a toothed wheel or gear. The invention also relate to determining error or irregularities in angular pitch; that is to say variation in individual angular pitches to a nominal angular pitch. Also disclosed is a corresponding method of determining tooth period and irregularities thereof. It has application to wheels having a number of teeth around the periphery and has application to gears and particularly to toothed crankshaft wheels. Aspects of the invention relate to improving the accuracy in determining the position of a crankshaft of an internal combustion engine.

BACKGROUND OF THE INVENTION

The position of a crankshaft is typically achieved by using sensors such as a single Hall Effect sensor which detects when the teeth of a gear or wheel device pass adjacent to the sensor. This information is used for such purposes as engine speed and position determination, as well as for software task scheduling such as injection timing.
In some applications, engine position and speed measurements are required with very high precision. The crankshaft angle to time conversion is required for injection timing. Misfire detection requires a high accuracy of engine speed/time interval between two consecutive teeth. Torque estimation based on tooth acceleration uses high resolution instantaneous tooth period determination. Each error on period measurement can introduce error in torque estimation.
In known methods, the engine position is measured using detected falling or rising edges output from a sensor which outputs a periodic signal corresponding to tooth period. To estimate the engine position and speed, current strategies generally assume that there are exactly a fixed angular interval (e.g. 6 degrees) between each falling or rising edge of a periodic signal equivalent to the angular period, detected by a sensor as each tooth passes it. This approximation leads to errors on engine position and speed as the real crank wheel tooth angle is not exactly e.g. 6°.
Currently several different methods are existing to correct the angular interval/pitch (e.g. 6°) approximation. US patent application publication US7607415B2 discloses a method of crank signal disturbance compensation. The weakness of the method therein assumes crankshaft speed and acceleration constant over k teeth (without acyclism and cylinder dispersion). Therefore, the ideal crank period for each tooth and respectively tooth error are affected by errors of the neighboring k teeth. US patent application US5789658 discloses an adaptation method for correcting tolerances of a transducer wheel. This method uses a linear regression to identify the errors. US patent application US5628291 describes a method for error correction in measurement of engine speed. This method is complex and needs high computation load. And also, it's difficult to obtain learning condition like constant engine speed without acyclism and cylinder dispersion impact. All these methods have limits link to the crank speed variations due to many cause such as friction, pumping, inertia, and such like.
It is an object of the invention to overcome such problems and provide a system and method to determine parameters such as angular pitch, tooth period or crank position with improved accuracy.

SUMMARY OF THE INVENTION

In one aspect is provided a method of determining the error in the angular interval, pitch or period of one or more teeth of a rotating toothed wheel having N teeth comprising:

i) generating a periodic signal corresponding to the tooth periods of said teeth passing a point;
ii) in respect of each tooth period Ti, for each tooth i, determining the value of the centered sum $T_i^{(N-1)}$ of the flanking N-1 periods;
iii) determining a measure of the local gradient $\Delta T_i^{N-1}$ of each centered sum $T_i^{(N-1)}$ ;
iv) computing the mean value of gradient $\overline{\Delta T}_i^{N-1}$ with respect to all centred sums $T_i^{(N-1)}$
v) computing an error value $\tau$ in respect of tooth angle period based on the difference between said mean value of gradient $\overline{\Delta T}_i^{N-1}$ and the local gradient $\Delta T_i^{N-1}$ calculated with respect of the tooth in step iii)

The local gradient $\overline{\Delta T}_i^{N-1}$ may be calculated from one of the following formulae:

$$\Delta T_i^{N-1} = T_i^{N-1} - T_{i-1}^{N-1} \ or \ \Delta T_i^{N-1} = T_{i+1}^{N-1} - T_i^{N-1}$$

The average value of gradient may be calculated from one of the following formulae the

$$\overline{\Delta T_i^{N-1}} = 1/N \sum_{k=i-N/2}^{k=i+\frac{N}{2}-1} \Delta T_k^{N-1}$$

or

$$\overline{\Delta T_i^{N-1}} = 1/N \sum_{k=i-\frac{N}{2}+1}^{k=i+\frac{N}{2}} \Delta T_k^{N-1}$$

The method may include determining a refined error value $(Error_i^{N-1})$, said refined error being the difference between the actual value of the centred sum $T_i^{(N-1)}$ calculated in step ii) and an ideal value thereof $(\hat{T}_i^{N-1})$, said ideal value being determined by linear interpolation of the values of centred sums $T_i^{N-1}$ of flanking teeth whose values for the error $\tau$ determined in step v) lie below a threshold.

The ideal value $\hat{T}_i^{N-1}$ may be computed for one of the following equations:

$$\hat{T}_i^{N-1} = T_{idx\_before}^{N-1} + \left(i - idx_{before}\right) * \widehat{\Delta T_i^{N-1}} \quad or \quad \hat{T}_i^{N-1} = T_{idx_{after}}^{N-1} -$$

$$\left(idx_{after} - i\right) * \widehat{\Delta T_i^{N-1}}$$

where $T_{idx\_before}^{N-1}$ and $T_{idx_{after}}^{N-1}$ are the values of the centred sum with respect to the previous and following flanking teeth respectively, $idx_{before}$ $idx_{after}$ are the indices of the previous and following flanking teeth respectively and i is the index of the current tooth, and $\widehat{\Delta T_i^{N-1}}$ is a determined average value of the step increase between the previous and following flanking tooth

The method may be performed under power off foot off or deceleration conditions.

BRIEF DESCRIPTION OF THE DRAWINGS

The present invention is now described by way of example with reference to the accompanying drawings in which:

Figure 1a shows an apparatus used to determine crank rotation;
Figure 1b shows an output signal from the apparatus of figure la;
Figure 2 shows the ideal crank signal vs real crank signal;
Figure 3 illustrates methods of determining the centered sum;
Figure 4 shows the Ti59 curve with respect of each tooth/pulse during deceleration;
Figure 5 shows $\Delta T_i^{59}$ against $\overline{\Delta T_i^{59}}$;
Figure 6 shows tables used in a refined example;
Figure 7 and 8 show a table and plots of results obtained from programmed crank angle profile with irregularities, and results computed form with the claimed methodology.

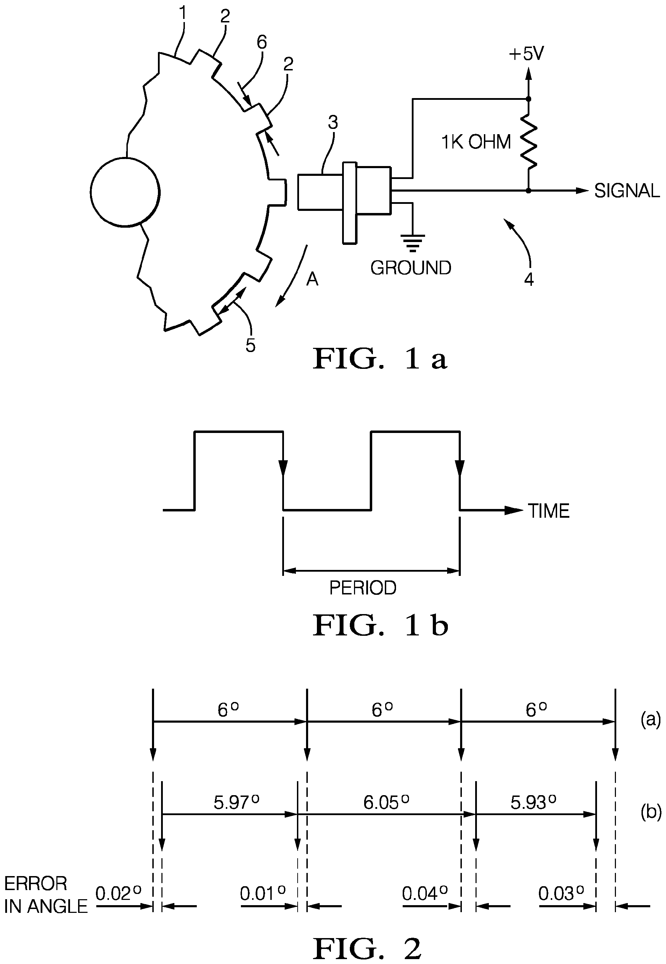

Figure la shows a known apparatus for determining crank position. A toothed wheel or cog 1, (including a number of teeth 2) attached to, or part of, a crankshaft rotates as shown by arrow A. A (e.g. Hall Effect) sensor 3 located adjacent to the wheel detects the presence and passing of a tooth as the crankshaft rotates and associated circuitry 4 outputs a signal as shown by figure 1b. The pulsed (periodic) output signal comprises pulses which correspond to each passing tooth.

Figure 2 shows an schematic representation of the ideal crank signal (a) against a real crank signal (b) . For a toothed wheel having 60 teeth, the angular (pitch) interval between the teeth (and thus the pulses i.e. period of the pulse) should be exactly 6°. However with a real toothed wheel, the interval between the teeth and thus the period of pulses from a sensor output circuit will vary around 6° as the toothed wheel will not be perfect - both the gap between the teeth 5 and the teeth width 6 will vary due to e.g. manufacturing tolerances. So in summary the angular interval between the teeth may vary slightly.

In one aspect is provided a method to determine tooth period or angular pitch/interval and thus also errors/irregularities in one or more teeth of a toothed (crankshaft) wheel using a method based on a cumulative tooth period over N-1 (e.g. 59 where N=60) teeth where N is the number of teeth on the crankshaft wheel (e.g. 60). Preferably, the method is implemented during an engine deceleration phase, without fuel injection to avoid fuel dispersion/perturbation and acyclism impact.

DESCRIPTION OF THE PREFERRED EMBODIMENTS

Assuming a rotating crank wheel with 60 teeth, for each tooth, the centered sum of 59 periods called $T_i^{59}$, for tooth "i" is calculated and given by:

$$T_i^{59} = \sum_{k=i-30}^{k=i-1} T_k + \sum_{k=i+1}^{k=i+29} T_k$$

In other words for a particular tooth (position) the centered sum with respect to a tooth, i, in a rotating toothed wheel, is the sum of the previous tooth periods in respect of the previous 30 teeth and the sum of the following 29 tooth periods. The term centered sum should be thus interpreted as such. It is to be noted that in other examples or embodiments the centered sum may be the sum of the previous period in respect of the previous 29 teeth and the sum of the following 30 periods. For toothed crank wheels or gears with odd numbered teeth the centered sum may have the same number of periods before and after the current tooth period. Thus for a wheel with N teeth, the centered sum can be regarded as approximately the previous N/2 tooth periods and the following approximately N/2 tooth periods, where the said previous N/2 periods and the following N/2 periods add up to N-1 tooth periods.

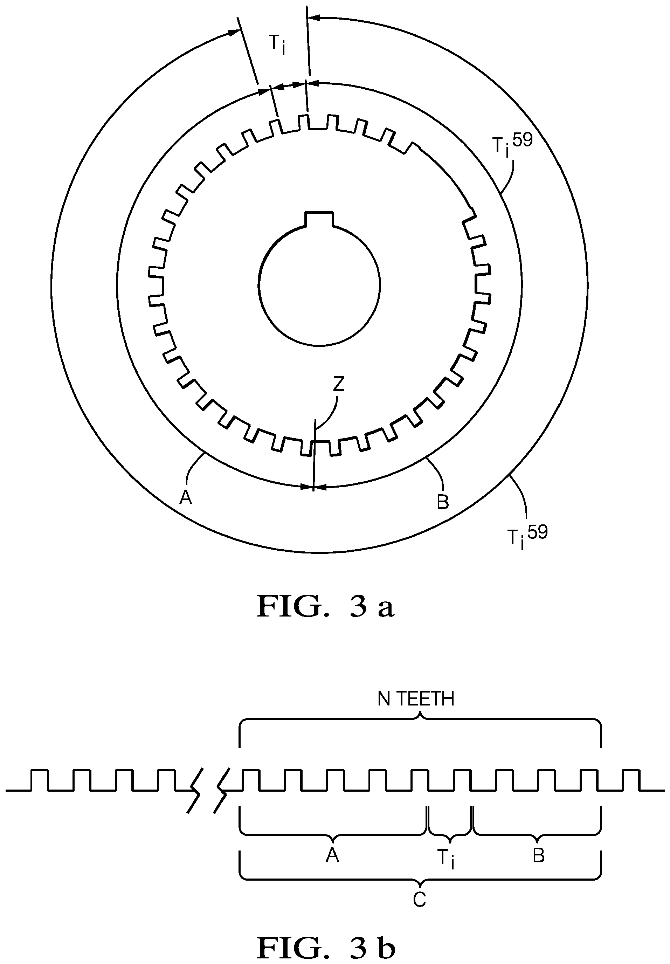

Figure 3a and 3b illustrate the centered sum for the tooth (or tooth period) "i". The wheel of figure 3a shows a number of teeth which could be regarded also as the signal output from sensor arrangement as in figure 1. Figure 3b represents the sensor output, and thus is a linear representation corresponding to figure 3b; it is to be noted that not all teeth are shown. The centered sum is the sum of two components: preceding tooth periods with respect to Ti (designated with reference A), and following periods with respect to Ti (designated B). A and B are equivalent to the two terms of the equation on the right hand side above. In general period A is approximately the sum of the periods of the previous N/2 teeth and period B the sum of the subsequent periods of the following N/2 teeth. Period C is one complete crank revolution. Ti (that is the tooth period of the current or considered tooth) + A + B = C (that is C = 1 crank revolution/ period)

So alternatively formulated for e.g. a 60 tooth wheel, $T_i^{59}$ can be defined as one crank revolution timing minus the current tooth period Ti:

$$T_i^{59} = T_i^{60} - T_i = \text{Crk\_Rev} - T_i$$

Thus by determining the summed period of N-1 periods of each tooth, except the current tooth, and taking this away from a complete crank revolution period, the period with respect of the current tooth can be determined $T_i^{59}$.

For a perfect wheel (no error, no gap teeth) and no engine acyclism, the $T_i^{59}$ will increase constantly during a deceleration phase

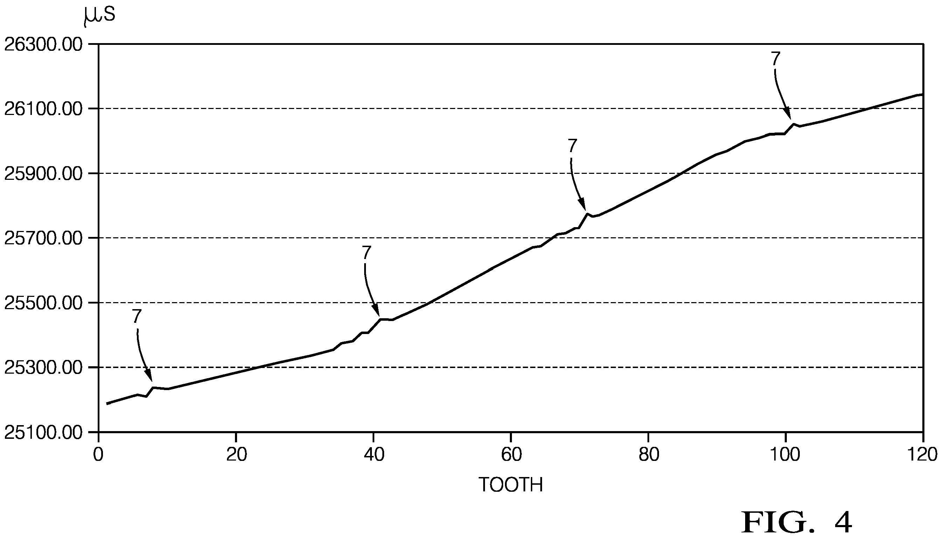

But in real case the increase is not regular, due to gap, teeth error and engine acyclism. Figure 4 shows the $T_i^{59}$ curve with respect of each tooth/pulse during deceleration. On the y-axis is $T_i^{59}$ against the tooth count - in this example there are 60 teeth but they are counted as summed. Generally the period increases as the crankshaft decelerates. As can be seen there are a number of notches 7 which result from imperfect (non -ideal) thus irregular teeth and consequentially teeth period.

In the next step, a determination of the local $T_i^{59}$ step increase or difference at each (ith) tooth is performed. Per unit time this could be regarded as a gradient.

The step increase in $T_i^{59}$ is:

$$\Delta T_i^{59} = T_i^{59} - T_{i-1}^{59}$$

Alternatively the step may be determined as

$$\Delta T_i^{59} = T_{i+1}^{59} - T_i^{59}$$

In general, for N teeth, the above two equations can be expressed as

$$\Delta T_i^{N-1} = T_i^{N-1} - T_{i-1}^{N-1}$$

$$\Delta T_i^{N-1} = T_{i+1}^{N-1} - T_i^{N-1}$$

Thus the term local gradient should be interpreted as such. It is to be noted the above equations refer to difference in consecutive values rather than the difference (change) with respect to time. Then, a mean value, on 60 teeth
(corresponding to a crank wheel revolution), the mean increase in step is computed.

$$\overline{\Delta T_i^{59}} = 1/60 \sum_{k=i-30}^{k=i+29} \Delta T_k^{59}$$

In general terms this can be expressed as :

$$\overline{\Delta T_i^{N-1}} = 1/N \sum_{k=i-N/2}^{k=i+\frac{N}{2}-1} \Delta T_k^{N-1}$$

or alternatively :

$$\overline{\Delta T_i^{N-1}} = 1/N \sum_{k=i-\frac{N}{2}+1}^{k=i+\frac{N}{2}} \Delta T_k^{N-1}$$

$\overline{\Delta T_i^{59}}$ is considered as the average step increase between $T_i^{59}$ points for consecutive teeth.. And so the difference between $\overline{\Delta T_i^{59}}$ and the measured $\Delta T_i^{59}$ is a deviation criteria $\tau$, which is a measure of tooth period/pitch/angular interval error for current tooth i.

$$\left| \Delta T_i^{59} - \overline{\Delta T_i^{59}} \right| = \tau$$

Thus the deviation criteria $\tau$ can be used as a measure of tooth error.

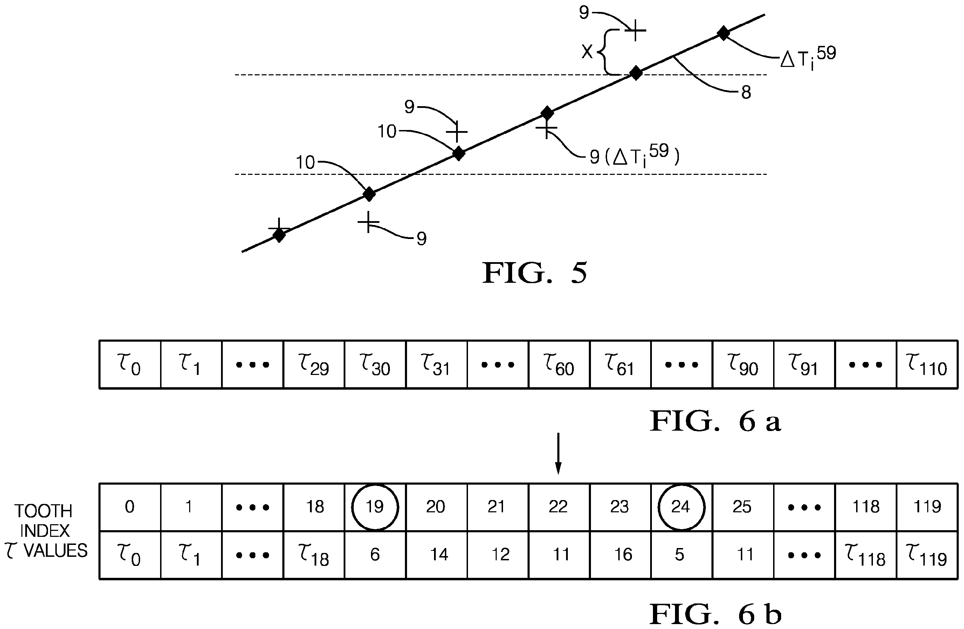

Figure 5 shows $\Delta T_i^{59}$ against $\overline{\Delta T_i^{59}}$. The plots of $\overline{\Delta T_i^{59}}$ (10) is indicated by line 8 and individual $\Delta T_i^{59}$ are indicated by crosses 9. The figure thus shows the deviation criteria or irregularities in the teeth $\tau$.

Refined Embodiment

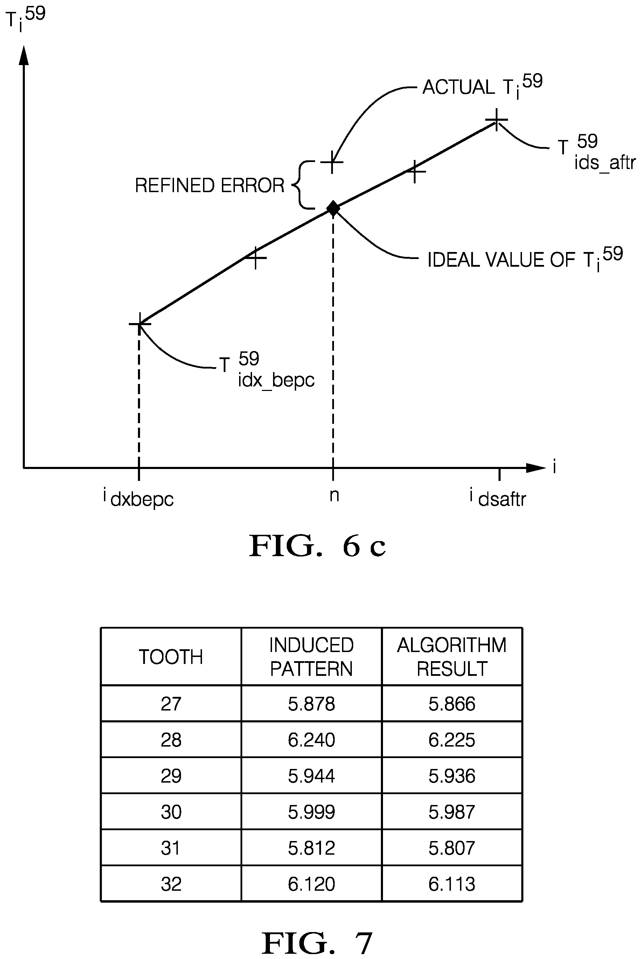

Then following methodology gives an improved and more accurate determination of tooth error. In figure 6a is shown a table of successive values of $\tau$ (with respect to successive teeth in a rotating crank wheel). In the example, the array represents 120 successive time (tooth) periods, e.g. corresponding to two crank wheel revolutions of a 60 tooth wheel. Figure 6a shows an indexing table where successive teeth have monotonically increasing index values (0, 1, 2, 3, .... ). Below them is shown the value of $\tau$.
In a refined embodiment the error is determined from the difference between the actual value $T_i^{59}$ and an ideal

value thereof (if the tooth was regular) designated $\overset{\wedge}{T}_i^{59}$. This is shown in figure 6c, which will be explained in more detail hereinafter.

Returning to figure 6b, shows a table of consecutive tooth periods and the computed values of $\tau$. If we consider the current tooth (i=n) whose error is to be determined, say tooth number 11, two teeth (or teeth periods to be more precise), one on either side i.e. flanking tooth (period) 11, are selected whose values of error $\tau$ are relatively small. Tooth number/period 19 has a relatively small value of $\tau$=6 and tooth period /number 24 has a relatively small value of $\tau$=6. These points are then used to find the average value of the step increase of in this general region i.e. around the tooth number 19, this more accurate value of average step increase being designated as $\widehat{\Delta T}_i^{59}$

In other words from the current tooth we search for a tooth (period) after and a tooth (period) before (but not too far from current index) with small $\tau$ values. Along with this an the index value of these teeth/teeth periods is determined. The indexing of successive teeth /teeth periods is in the simplest form monotonically increasing integers as seen in the tables of figure 6. The tooth/period index found after the current tooth/period is designated (idxafter) and the index value of the tooth/tooth period found after the current tooth is designated (idx_before).

In the example of figure 6a and b, to compute the ideal step increase in the region of tooth/tooth period number 22, if tooth 22 was regular (had no error in pitch or period) then thus step increase $\widehat{\Delta T}_{22}^{59}$ (ideal $\Delta T_i^{59}$) uses $\Delta T_{19}^{59}$ and $\Delta T_{24}^{59}$ are used (as reference) to determine the value. The general equation is:

$$\widehat{\Delta T}_i^{59} = \frac{\left( \Delta T_{idx\_after}^{59} - \Delta T_{idx\_before}^{59} \right)}{idx_{after} - idx_{before}}$$

This is seen from figure 5. In the example for tooth 22 this becomes

$$\widehat{\Delta T}_{22}^{59} = \frac{\left( \Delta T_{24}^{59} - \Delta T_{19}^{59} \right)}{24 - 19}$$

Referring back to figure 5, the value $\widehat{\Delta T}_i^{59}$ is a more accurate determination of the average step increase $\overline{\Delta T}_i^{59}$ in the region. This value is used to determine a further refined value of the error as will be explained. So to sum up by selecting two points (with a criteria of $\tau$ being low) flanking the current tooth it is possible to determine a corrected $\Delta T_i^{59}$ note as $\widehat{\Delta T}_i^{59}$.

Figure 6c shows a plot of $T_i^{59}$ for successive teeth I, so similar to t figure 4. The actual value of $\overset{.}{T}_n^{59}$ (in other words where i=n) is shown but the idea value $\overset{\wedge}{T}_i^{59}$ lies on the line Z, which is a line joining the values of $T_i^{59}$ for teeth flanking the current tooth n, having index of $i_{dx\ before}$ and $i_{dx\ after}$. These flanking teeth are selected for having values of $\tau$ being low and then the value of $\overset{\wedge}{T}_i^{59}$ is found by linear interpolation. The refined error is the difference between $T_i^{59}$ and $\overset{\wedge}{T}_i^{59}$. The value of $\overset{\wedge}{T}_i^{59}$ is determined from $\widehat{\Delta T}_i^{59}$ as described hereinafter.

So from the $\widehat{\Delta T}_i^{59}$ the ideal value of $T_i^{59}$ being $\overset{\wedge}{T}_i^{59}$ (the ideas value for that tooth) can be calculated as given.

$$\hat{T}_i^{59} = T_{idx\_before}^{59} + \left( i - idx_{before} \right) * \widehat{\Delta T}_i^{59}$$

Finally a crank period error (us) for each tooth can be calculated by following equation

$$= T_i^{59} - \hat{T}_i^{59}$$

This period error can be converted to a pitch angle/interval and so the real angle of each tooth can be obtained.

$$TEC_i = 6 * (1 - \frac{Error_i^{59}}{T_i})$$

And in pitch factor

$$TEC_i = 1 + \frac{Error_i^{59}}{T_i} \;, i = 1, \dots 30$$

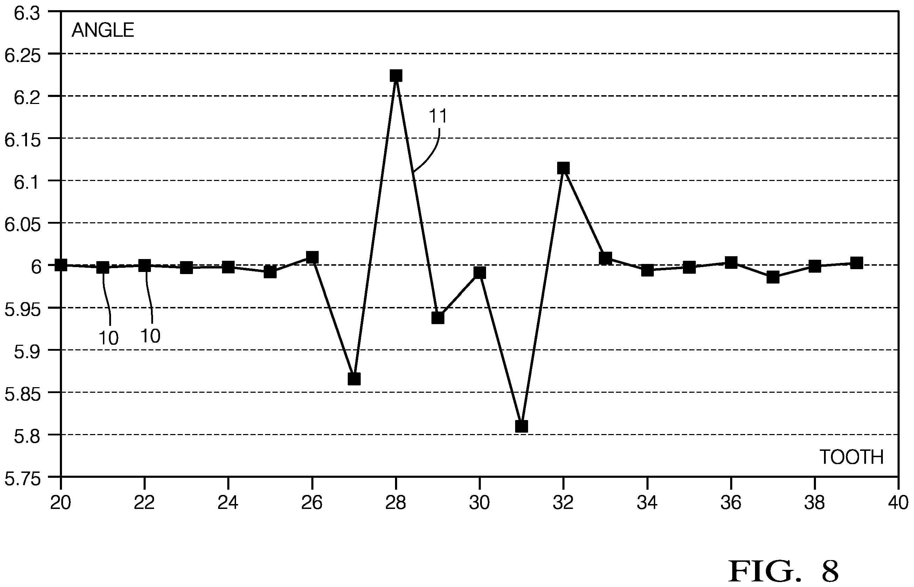

The table of figure 7 shows the results of tests with a programmed crank wheel pattern (irregular) obtained with the above method. Further tests were done on vehicle with real driving and crankshaft mounting conditions. Figure 8 shows a plot of individual crank angle calculated for numbered teeth according to the above methodology with an actual angle in a programmed crank angle profile with irregularities as shown by line 11.

The results show good repeatability and little dispersion among all environmental conditions met. This method allows determination of crank tooth error (TEC). It is less sensitive than other prior art method to engine speed variation. The methodology doesn't need acquisition chain modification and can be easily implemented for n many applications and allow error identification without impact of the engine speed variation and it is less complex so its needs less CPU load consumption.

**Claims**

1.  A method of determining the error in the period of one or more teeth of a rotating toothed wheel having N teeth comprising:

    i) generating a periodic signal corresponding to the tooth periods of said teeth passing a point;
    ii) in respect of each tooth period Ti, for each tooth i, determining the value of the centered sum $Ti^{(N-1)}$ of the flanking N-1 periods;
    iii) determining a measure of the local gradient $\Delta T_i^{N-1}$ of each centered sum $Ti^{(N-1)}$;
    iv) computing the mean value of gradient $\overline{\Delta T_i}^{N-1}$ with respect to all centred sums $Ti^{(N-1)}$
    v) computing an error value $\tau$ in respect of tooth angle period based on the difference between said mean value of gradient $\overline{\Delta T_i}^{N-1}$ and the local gradient $\Delta T_i^{N-1}$ calculated with respect of the tooth in step iii)

2.  A method as claimed in claim 1 wherein the local gradient $\Delta T_i^{N-1}$ is calculated from one of the following formulae:

$$\Delta T_i^{N-1} = T_i^{N-1} - T_{i-1}^{N-1} \; or \; \Delta T_i^{N-1} = T_{i+1}^{N-1} - T_i^{N-1}$$

3.  A method as claimed in claims 1 or 2 wherein the average value of gradient is calculated from one of the following formulae the

$$\overline{\Delta T_i}^{N-1} = 1/N \sum_{k=i-N/2}^{k=i+\frac{N}{2}-1} \Delta T_k^{N-1}$$

or

$$\overline{\Delta T_i}^{N-1} = 1/N \sum_{k=i-\frac{N}{2}+1}^{k=i+\frac{N}{2}} \Delta T_k^{N-1}$$

4.  A method as claimed in claims 1 to 3 including determining a refined error value $(Error_i^{N-1})$

said refined error being the difference between the actual value of the centred sum $T_i^{(N-1)}$ calculated in step ii) and an ideal value thereof $(\widehat{T}_i^{N-1})$, said ideal value being determined by linear interpolation of the values of centred sums $T_i^{N-1}$ of flanking teeth whose values for the error $\tau$ determined in step v) lie below a threshold.

5. A method as claimed in claim 4 wherein the ideal value $\widehat{T}_i^{N-1}$ is computed for one of the following equations:

$$\widehat{T}_i^{N-1} = T_{idx\_before}^{N-1} + \left( i - idx_{before} \right) * \widehat{\Delta T}_i^{N-1}$$

or

$$\widehat{T}_i^{N-1} = T_{idx_{after}}^{N-1} - \left( idx_{after} - i \right) * \widehat{\Delta T}_i^{N-1}$$

where $T_{idx\_before}^{N-1}$ and $T_{idx_{after}}^{N-1}$ are the values of the centred sum with respect to the previous and following flanking teeth respectively , $idx_{before}$ $idx_{after}$ are the indices of the previous and following flanking teeth respectively and i is the index of the current tooth, and $\widehat{\Delta T}_i^{N-1}$ is a determined average value of the step increase between the previous and following flanking tooth

6. A method as claimed in claims 1 to 5 wherein said method is performed under power off foot off or deceleration conditions.

**Patentansprüche**

1. Verfahren zum Bestimmen des Fehlers in der Periode eines oder mehrerer Zähne eines rotierenden Zahnrads mit N Zähnen, das aufweist:

   i) Erzeugen eines periodischen Signals entsprechend den Zahnperioden der Zähne, die einen Punkt passieren;
   ii) in Bezug auf jede Zahnperiode Ti, für jeden Zahn i, Bestimmen des Werts der zentrierten Summe Ti(N-1) der flankierenden N-1 Perioden;
   iii) Bestimmen eines Maßes des lokalen Gradienten $\Delta T_i^{N-1}$ jeder zentrierten Summe Ti(N-1).
   iv) Berechnen des Mittelwerts des Gradienten $\overline{\Delta T}_i^{N-1}$ in Bezug auf alle zentrierten Summen Ti(N-1);
   v) Berechnen eines Fehlerwerts $\tau$ in Bezug auf eine Zahnwinkelperiode basierend auf der Differenz zwischen dem Mittelwert des Gradienten $\overline{\Delta T}_i^{N-1}$ und dem lokalen Gradienten $\Delta T_i^{N-1}$, berechnet in Bezug auf den Zahn in Schritt iii).

2. Verfahren gemäß Anspruch 1, wobei der lokale Gradient $\Delta T_i^{N-1}$ aus einer der folgenden Formeln berechnet wird:

$$\Delta T_i^{N-1} = T_i^{N-1} - T_{i-1}^{N-1}$$

oder

$$\Delta T_i^{N-1} = T_{i+1}^{N-1} - T_i^{N-1}$$

3. Verfahren gemäß den Ansprüchen 1 oder 2, wobei der Durchschnittswert des Gradienten aus einer der folgenden Formeln berechnet wird:

$$\overline{\Delta T_i}^{N-1} = 1/N \sum_{k=i-N/2}^{k=i+\frac{N}{2}-1} \Delta T_k^{N-1}$$

$$\overline{\Delta T_i}^{N-1} = 1/N \sum_{k=i-\frac{N}{2}+1}^{k=i+\frac{N}{2}} \Delta T_k^{N-1}$$

4. Verfahren gemäß den Ansprüchen 1 bis 3, das ein Bestimmen eines verfeinerten Fehlerwerts $(Error_i^{N-1})$ umfasst,

wobei der verfeinerte Fehler die Differenz zwischen dem tatsächlichen Wert der zentrierten Summe $T_i^{N-1}$, die in Schritt ii) berechnet wird, und einem idealen Wert davon ist $(\widehat{T}_i^{N-1})$, wobei der ideale Wert durch eine lineare Interpolation der Werte von zentrierten Summen $T_i^{N-1}$ von flankierenden Zähnen bestimmt wird, deren Werte für den in Schritt v) bestimmten Fehler τ unter einer Schwelle liegen.

5. Verfahren gemäß Anspruch 4, wobei der ideale Wert $\widehat{T}_i^{N-1}$ für eine der folgenden Gleichungen berechnet wird:

$$\widehat{T}_i^{N-1} = T_{idx\_before}^{N-1} + \left(i - idx_{before}\right) * \widehat{\Delta T}_i^{N-1}$$

oder

$$\widehat{T}_i^{N-1} = T_{idx_{after}}^{N-1} - \left(idx_{after} - i\right) * \widehat{\Delta T}_i^{N-1}$$

wobei $T_{idx\_before}^{N-1}$ und $T_{idx_{after}}^{N-1}$ die Werte der zentrierten Summe in Bezug auf die vorherigen bzw. folgenden flankierenden Zähne sind, $idx_{before}$ und $idx_{after}$ die Indizes der vorherigen bzw. folgenden flankierenden Zähne sind und $\widehat{\Delta T}_i^{N-1}$ ein bestimmter Durchschnittswert der Schrittzunahme zwischen dem vorherigen und dem folgenden flankierenden Zahn ist.

6. Verfahren gemäß den Ansprüchen 1 bis 5, wobei das Verfahren unter Ausschalt-, "Fuß wegnehmen"- oder Verlangsamungsbedingungen durchgeführt wird.

## Revendications

1. Procédé de détermination de l'erreur dans la période d'une ou de plusieurs dents d'une roue dentée en rotation à N dents, comprenant les étapes consistant à :

   i) générer un signal périodique correspondant aux périodes de dent desdites dents passant un point ;
   ii) à l'égard de chaque période de dent Ti, pour chaque dent i, déterminer la valeur de la somme centrée $Ti^{(N-1)}$ des N-1 périodes juxtaposées ;
   iii) déterminer une mesure du gradient local $\Delta T_i^{N-1}$ de chaque somme centrée $Ti^{(N-1)}$;
   iv) calculer la valeur moyenne de gradient $\overline{\Delta T_i}^{N-1}$ par rapport à toutes les sommes centrées $Ti^{(N-1)}$;
   v) calculer une valeur d'erreur τ à l'égard de la période angulaire de dent sur la base de la différence entre ladite valeur moyenne de gradient $\overline{\Delta T_i}^{N-1}$ et le gradient local $\Delta T_i^{N-1}$ calculée par rapport à la dent à l'étape iii).

2. Procédé selon la revendication 1, dans lequel le gradient local $\Delta T_i^{N-1}$ est calculé à partir de l'une des formules

suivantes :

$$\Delta T_i^{N-1} = T_i^{N-1} - T_{i-1}^{N-1} \ ou \ \Delta T_i^{N-1} = T_{i+1}^{N-1} - T_i^{N-1}$$

3. Procédé selon la revendication 1 ou 2, dans lequel la valeur moyenne de gradient est calculée à partir de l'une des formules suivantes :

$$\overline{\Delta T_i}^{N-1} = 1/N \sum_{k=i-N/2}^{k=i+\frac{N}{2}-1} \Delta T_k^{N-1}$$

ou

$$\overline{\Delta T_i}^{N-1} = 1/N \sum_{k=i-\frac{N}{2}+1}^{k=i+\frac{N}{2}} \Delta T_k^{N-1}$$

4. Procédé selon l'une des revendications 1 à 3, incluant l'étape consistant à déterminer une valeur d'erreur affinée $(Erreur_i^{N-1})$, ladite erreur affinée étant la différence entre la valeur réelle de la somme centrée Ti(N-1) calculée à l'étape ii) est une valeur idéale de celle-ci $(\widehat{T}_i^{N-1})$, ladite valeur idéale étant déterminée par une interpolation linéaire des valeurs de sommes centrées $T_i^{N-1}$ de dents juxtaposées dont des valeurs pour l'erreur τ déterminée à l'étape v) se trouvent dessous d'un seuil.

5. Procédé selon la revendication 4, dans lequel la valeur idéale $\widehat{T}_i^{N-1}$ est calculée pour l'une des équations suivantes :

$$\widehat{T}_i^{N-1} = T_{idx\_avant}^{N-1} + (i - idx_{avant}) * \widehat{\Delta T_i}^{N-1}$$

ou

$$\widehat{T}_i^{N-1} = T_{idx_{après}}^{N-1} - \left( idx_{après} - i \right) * \widehat{\Delta T_i}^{N-1}$$

où $T_{idx\_avant}^{N-1}$ et $T_{idx_{eprès}}^{N-1}$ sont les valeurs de la somme centrée par rapport aux dents juxtaposées précédente et suivante respectivement, $idx_{avant}$ et $idx_{après}$ sont les indices des dents juxtaposées précédente et suivante respectivement, et i est l'indice de la dent actuelle, et $\widehat{\Delta T_i}^{N-1}$ est une valeur moyenne déterminée du saut d'augmentation entre la dent juxtaposée précédente et la dent juxtaposée suivante.

6. Procédé selon les revendications 1 à 5, dans lequel ledit procédé est exécuté alimentation coupée, pied levé ou dans des conditions de décélération.

FIG. 1 a

FIG. 1 b

FIG. 2

FIG. 3 a

FIG. 3 b

FIG. 4

FIG. 5

EP 3 532 802 B1

| $\tau_0$ | $\tau_1$ | $\bullet\bullet\bullet$ | $\tau_{29}$ | $\tau_{30}$ | $\tau_{31}$ | $\bullet\bullet\bullet$ | $\tau_{60}$ | $\tau_{61}$ | $\bullet\bullet\bullet$ | $\tau_{90}$ | $\tau_{91}$ | $\bullet\bullet\bullet$ | $\tau_{110}$ |
|---|---|---|---|---|---|---|---|---|---|---|---|---|---|

FIG. 6 a

| TOOTH INDEX | 0 | 1 | $\bullet\bullet\bullet$ | 18 | ⃝19 | 20 | 21 | 22 | 23 | ⃝24 | 25 | $\bullet\bullet\bullet$ | 118 | 119 |
|---|---|---|---|---|---|---|---|---|---|---|---|---|---|---|
| $\tau$ VALUES | $\tau_0$ | $\tau_1$ | $\bullet\bullet\bullet$ | $\tau_{18}$ | 6 | 14 | 12 | 11 | 16 | 5 | 11 | $\bullet\bullet\bullet$ | $\tau_{118}$ | $\tau_{119}$ |

FIG. 6 b

FIG. 6 c

| TOOTH | INDUCED PATTERN | ALGORITHM RESULT |
|---|---|---|
| 27 | 5.878 | 5.866 |
| 28 | 6.240 | 6.225 |
| 29 | 5.944 | 5.936 |
| 30 | 5.999 | 5.987 |
| 31 | 5.812 | 5.807 |
| 32 | 6.120 | 6.113 |

FIG. 7

FIG. 8

EP 3 532 802 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7607415 B2
- US 5789658 A
- US 5628291 A